Europäisches Patentamt

European Patent Office

Office européen des brevets

(19)

(11) Numéro de publication : **0 202 960**
**B1**

(12)    **FASCICULE DE BREVET EUROPÉEN**

(45) Date de publication du fascicule du brevet :
**19.07.89**

(21) Numéro de dépôt : **86400613.5**

(22) Date de dépôt : **24.03.86**

(51) Int. Cl.⁴ : **C 08 G 18/67**, C 09 J 3/16,
B 32 B 17/10, C 09 J 3/14

(54) **Couche adhésive utilisée dans la fabrication de vitrages feuilletés et vitrages feuilletés comprenant une telle couche.**

(30) Priorité : **28.03.85 FR 8504645**

(43) Date de publication de la demande :
**26.11.86 Bulletin 86/48**

(45) Mention de la délivrance du brevet :
**19.07.89 Bulletin 89/29**

(84) Etats contractants désignés :
**AT BE CH DE FR GB IT LI NL SE**

(56) Documents cités :
EP--A-- 0 142 228
FR--A-- 2 184 925
FR--A-- 2 303 835
US--A-- 3 823 051

(73) Titulaire : **SAINT-GOBAIN VITRAGE**
**Les Miroirs 18, avenue d'Alsace**
**F-92400 Courbevoie (FR)**

(72) Inventeur : **Bravet, Jean-Louis**
**5, Avenue du Moulin**
**F-60150 Thourotte (FR)**
Inventeur : **Daude, Gérard**
**11, Rue René Voisin**
**F-33140 Villeneuve D'Ornon (FR)**

(74) Mandataire : **Muller, René et al**
**SAINT-GOBAIN RECHERCHE 39, quai Lucien Lefranc**
**F-93304 Aubervilliers (FR)**

EP 0 202 960 B1

Jouve, 18, rue St-Denis, 75001 Paris, France

## Description

La présente invention concerne la fabrication de vitrages feuilletés en verre et/ou en matière plastique tels des vitrages feuilletés de grandes dimensions comme des vitrages automobiles, de bâtiments et de plus petites dimensions tels les masques, écrans, lunettes, etc... Plus particulièrement, l'invention concerne une nouvelle couche adhésive utilisée dans la fabrication de tels vitrages feuilletés. Elle concerne encore les vitrages feuilletés comprenant cette couche adhésive.

L'utilisation d'une couche de polyuréthane en tant que couche adhésive dans les vitrages feuilletés est connue et décrite dans de nombreuses publications de brevets. Cette couche peut remplir la seule fonction de collage. Elle peut tenir en outre un rôle d'absorbeur d'énergie.

Cette couche adhésive peut être utilisée pour assembler des feuilles de substances diverses en verre et/ou en matières plastiques.

Par exemple dans la publication de brevet français 2 398 606, on décrit l'utilisation d'une couche de polyuréthane thermoplastique pour l'adhésion avec un support en verre ou en matière plastique d'une couche de matière plastique autocicatrisable, c'est-à-dire une couche de laquelle les impressions locales disparaissent spontanément après un court laps de temps, de l'ordre de quelques minutes, cette vitesse de disparition étant fonction de la nature de l'impression et de la température de la matière plastique. En même temps, cette couche peut être antilacérante. C'est-à-dire qu'en cas de bris d'un vitrage en verre, la couche recouvre les arêtes vives du verre et protège la face, les yeux ou d'autres parties du corps des passagers d'un véhicule par exemple, ou encore lorsqu'il s'agit de lunettes de sécurité, la couche de protection peut éviter le contact des arêtes vives avec les yeux.

L'assemblage de la couche de matière plastique autocicatrisable et antilacérante avec le support par l'intermédiaire de la couche thermoplastique s'effectue à l'aide de la chaleur et de la pression, par exemple en soumettant le feuilleté à un cycle d'autoclave.

Dans la publication de brevet européen 0 032 329, on décrit l'utilisation d'une couche adhésive à base d'un polyuréthane thermoplastique contenant un agent de blocage. Là encore, lorsqu'on utilise cette couche pour fabriquer des vitrages feuilletés, notamment pour associer la couche de matière plastique autocicatrisable et antilacérante à un support rigide, il faut utiliser la chaleur et la pression, par exemple en soumettant l'ensemble à un cycle d'autoclave à une température supérieure à 110 °C.

En outre, dans cet art antérieur, la fabrication de la couche adhésive nécessite l'utilisation de la chaleur pour la polymérisation du polyuréthane.

On connaît aussi d'après la publication de brevet US-A3 823 051 une couche intercalaire pour vitrage feuilleté en verre, à base d'un polyuréthane comportant dans sa formulation, dans une faible proportion, un ester acrylique contenant un groupe hydroxy. La fabrication de la couche et son assemblage avec les autres éléments du vitrage nécessitent encore des conditions habituelles de température.

L'invention propose l'utilisation d'une couche adhésive formée à partir d'une composition adhésive polymérisable à froid, c'est-à-dire à une température généralement inférieure à 80 °C. La couche adhésive utilisée selon l'invention pour la fabrication des vitrages feuilletés comprenant un support monolithique ou feuilleté et une feuille de polyuréthane, comprend un polyuréthane formé à partir d'un composant isocyanate choisi parmi les isocyanates aliphatiques, cycloaliphatiques, aliphatiques-aromatiques non sensibles à la lumière et pouvant contenir des fonctions urées ou encore des biurets d'isocyanate, un composant polyol comprenant au moins un polyol choisi parmi les polyétherpolyols ou les polyesterpolyols de masse moléculaire comprise entre 450 et 2 000, les polycaprolactones de masse moléculaire comprise entre 500 et 2 000, des polycarbonatepolyols et polyesterpolycarbonatepolyols de masse moléculaire comprise entre 1 000 et 2 000, des polybutadiènes à fonction hydroxyle ou carboxyle, au moins un diol court de masse moléculaire comprise entre 50 et 200, au moins un monoalcool de masse moléculaire inférieure à 300 présentant dans sa formule une double liaison éthylénique et au moins un initiateur de polymérisation.

On peut utiliser en particulier en tant qu'isocyanate par exemple les isocyanates difonctionnels aliphatiques comme le 1,6-hexanediisocyanate, le 2,2,4-triméthyl-1,6-hexanediisocyanate, le 1,3-bis (isocyanatométhy) benzène, le bis-(4-isocyanato-cyclohexy) méthane, le bis-(3-méthyl-4-isocyanatocyclohexyl) méthane, le 2,2-bis-(4-isocyanatocyclohexyl) propane et le 3-isocyanatométhyl-3,5,5-triméthylcyclohexylisocyanate, le p-phénylénediisocyanate et p-cyclohexyldiisocyanate.

On utilise par exemple en tant que polyols des polyols obtenus par réaction d'alcools polyfonctionnels avec des diacides aliphatiques ou des éthers cycliques. Les alcools polyfonctionnels sont par exemple le 1,2-éthanediol (éthylèneglycol), le 1,2-propanediol, le 1,3-propanediol, le 1,2-butanediol, le 1,4-butanediol, le 2,2-diméthyl-1,3-propanediol (néopentylglycol), le 1,6-hexanediol, le 2-méthyl-2,4-pentanediol, le 3-méthyl-2,4-pentanediol, le 2-éthyl-1,3-hexanediol, le 2,2,4-triméthyl-1,3-pentanediol, le diéthylèneglycol, le triéthylèneglycol, les polyéthylèneglycols, le dipropylèneglycol, le tripropylèneglycol, les polypropylèneglycols ou le 2,2-bis (hydroxyméthyl)1-1-propanol (triméthyloléthane), le 2,2-bis (hydroxyméthyl)-1-butanol (triméthylolpropane), le 1,2,4-butanetriol, le 1,2,6-hexanetriol, le 2,2-bis (hydroxyméthyl)-1,3-propanediol (pentaérythritol) et le 1,2,3,4,5,6-hexanehexol (sorbitol), le cyclohexanediméthanol.

Les diacides aliphatiques sont par exemple l'acide malonique, l'acide succinique, l'acide glutarique, l'acide adipique, l'acide subérique, et l'acide sébacique.

Parmi les mono-alcools de masse moléculaire inférieure à 300 présentant une double liaison éthylénique, on choisit de préférence l'acrylate d'hydroxyéthyle ou l'alcool allylique.

Le composant polyol peut encore comprendre le cas échéant un agent réticulant de fonctionnalité supérieure à 2 tel un triol de masse moléculaire comprise entre 100 et 3 000.

L'initiateur de polymérisation utilisé dans le cadre de l'invention peut être choisi parmi les photo-initiateurs lorsque la polymérisation de la couche est effectuée sous un rayonnement ultraviolet ou sous un rayonnement d'électrons. Ce peut être aussi un dérivé radicalaire susceptible de former des radicaux libres sous l'effet d'une température relativement basse, par exemple de l'ordre de 60 °C. En tant que photo-initiateur, on peut citer la benzophénone, l'acétophénone, l'éther isobutylique de la benzoïne.

La couche adhésive peut être formée in situ sur un des éléments à assembler. Cette couche adhésive peut encore être formée sur un support auquel elle n'adhère pas fortement, pour former une feuille que l'on détache dudit support de coulée, et qu'on intercale entre les éléments à assembler.

Lorsqu'on forme la couche directement sur un des éléments à assembler, on associe de préférence l'autre élément avant la polymérisation théorique totale du polyuréthane de sorte que le collage est réalisé au moment de cette polymérisation.

Lorsque la couche adhésive est utilisée pour l'assemblage de la couche de matière plastique présentant des propriétés d'antilacération et d'autocicatrisation déjà citées avec un support monolithe ou feuilleté, en verre ou en matière plastique, on peut avantageusement fabriquer au préalable une feuille à deux couches de la façon suivante.

On fabrique tout d'abord la couche de matière plastique antilacérante et autocicatrisable formée notamment d'un polyuréthane thermodurcissable, et sur cette première couche, on forme la deuxième couche.

On peut ainsi fabriquer tout d'abord une couche de polyuréthane thermodurcissable par coulée du mélange des composants sur un support de coulée. Après polymérisation des monomères et formation d'une couche thermodurcissable d'épaisseur pouvant varier entre 0,2 et 0,8 mm, on coule la composition réactionnelle apte à former la couche adhésive. La couche de colle peut avoir une épaisseur comprise entre 0,01 et 1 mm selon l'application désirée. La feuille est ensuite détachée du support avant polymérisation totale de la couche adhésive, pour être associée à un substrat en verre ou en matière plastique. Le collage des éléments est réalisé en même temps que la poursuite de la polymérisation de la couche adhésive, par un traitement aux U.V ou analogue au cas ou la couche adhésive contient un initiateur sensible aux U.V., ou par un traitement thermique limité au cas ou la couche adhésive contient un initiateur du type dérivé radicalaire.

Lorsque la couche adhésive est utilisée pour l'assemblage de la feuille à deux couches décrites dans la publication de brevet européen 0 133 090, on peut opérer de la même façon, en formant d'abord les deux couches constitutives de la feuille puis la couche adhésive.

On peut ainsi fabriquer des vitrages de sécurité tels que des vitrages automobiles, notamment des parebrises, des vitrages de bâtiments, des lunettes de protection, etc...

Dans une variante, on peut effectuer la polymérisation de la couche adhésive avant l'assemblage avec les autres éléments du vitrage, alors qu'elle est par exemple encore sur le support de formation de la feuille. A ce moment, la feuille est traitée de façon convenable par exemple par passage sous un rayonnement U.V.

La couche adhésive peut être formée par coulée du mélange des composants sur un support ou comme indiqué précédemment, sur un des éléments à assembler ou le cas échéant sur les deux. La coulée peut être réalisée grâce à une tête de coulée comme celle décrite par exemple dans la publication de brevet français 2 347 170. Dans une variante, la couche adhésive peut être formée par une pulvérisation du mélange des composants. A cet effet on peut utiliser une pulvérisation centrifuge à l'aide d'un bol tournant à une vitesse comprise entre 1 000 et 80 000 tours/min.

En fonction du rôle que doit remplir la couche adhésive dans l'assemblage, on a la possibilité de modifier ses propriétés mécaniques en agissant sur le degré de polymérisation du polyuréthane, c'est-à-dire en jouant sur les longueurs de chaînes dudit polymère. Ainsi lorsque la couche adhésive n'a à remplir que la fonction adhésive, il n'est pas toujours nécessaire d'effectuer une polymérisation totale du polyuréthane telle qu'elle pourrait être théoriquement lorsque la composition de départ contient un initiateur de polymérisation. Dans ce cas on ne fera pas réagir toutes les doubles liaisons éthyléniques ou acryliques des chaînes de polyuréthane.

Cependant, dans le cas général, on effectuera une polymérisation totale par un traitement aux U.V. ou par un traitement analogue. Cette polymérisation garantit le maintien du collage dans le temps.

Si la couche adhésive doit remplir en plus de la fonction adhésive, une fonction d'absorbeur d'énergie, on choisira alors une composition et un procédé de polymérisation procurant des chaînes plus longues par greffage de chaînes entre-elles au niveau des doubles liaisons éthyléniques.

La couche adhésive selon l'invention peut être utilisée pour la fabrication d'un vitrage feuilleté de sécurité comprenant une feuille de verre, une couche de matière plastique ayant des propriétés d'absorbeur d'énergie (couche AE), une couche antilacérante et autocicatrisable, la couche adhésive assurant la liaison de la feuille de verre avec la couche AE.

La couche adhésive selon l'invention peut encore être utilisée pour la fabrication d'un vitrage de sécurité formé d'un support monolithe ou feuilleté, en verre ou en matière plastique, sur lequel adhère par l'intermédiaire de la couche adhésive, une couche antilacérante et autocicatrisable comme décrite précédemment.

La couche adhésive selon l'invention peut encore être utilisée pour l'assemblage d'une feuille de verre avec une feuille de polycarbonate ou d'autres couches de matière plastique.

D'autres avantages et caractéristiques de l'invention apparaîtront dans la description suivante d'exemples de réalisation et d'application de la couche adhésive selon l'invention.

Exemple 1

On prépare un polyuréthane-acrylique par mélange d'un composant polyol formé à partir de 28 g (0,0266 mole) d'un polyesterdiol, 10,2 g (0,0122 mole) d'un polycaprolactonediol de masse moléculaire 830, 15,4 g (0,123 mole) d'un polycaprolactonediol de masse moléculaire 1 250, 26,7 g (0,0267 mole) d'un polyéther de masse moléculaire 1 000, 3 g (0,0027 mole) d'un polyestertriol de masse moléculaire 1 100. On additionne ensuite 67 g (0,25 mole) d'isophorone diisocyanate et on fait réagir 1h30 à 70 °C. On ajoute ensuite 18,5 g (0,16 mole) d'acrylate de hydroxyéthyle et 0,93 g (0,005 mole) de benzophénone en tant qu'initiateur de polymérisation. On fait réagir 1 heure à 70 °C afin de former un polyuréthane à fonction acrylique. On ajoute ensuite de l'acide acrylique pour abaisser la viscosité du mélange et le rendre coulable.

Le mélange est coulé sur une feuille de verre pour former une couche incolore et homogène. Sur la couche formée, on place une seconde feuille de verre et l'ensemble est soumis à un rayonnement électronique suffisamment puissant pour activer la double liaison acrylique et augmenter la polymérisation du polyuréthane.

On obtient finalement un vitrage feuilleté qui présente une excellente adhésion entre les éléments et une bonne qualité optique.

Exemple 2

Le mélange décrit dans l'exemple 1, apte à former un polyuréthane-acrylique, est coulé sur une couche préalablement formée de polyuréthane thermodurcissable comme décrit dans la publication de brevet français 2 398 606. La feuille à deux couches est assemblée à un support constitué de deux feuilles de verre et d'une couche intercalaire d'un absorbeur d'énergie tel un polyvinylbutyral. L'ensemble est ensuite soumis à un traitement aux U.V. à travers la feuille de matière plastique. Le vitrage obtenu est exempt de défauts optiques et l'adhésion obtenue entre les éléments est bonne.

Exemple 3

On opère dans les mêmes conditions que dans l'exemple 1 sauf qu'on remplace l'acrylate d'hydroxyéthyle par l'alcool allylique.

Le mélange est coulé sur une feuille de verre pour former une couche d'épaisseur homogène. Puis sur la couche formée on place une seconde feuille de verre et l'ensemble est soumis à un traitement aux U.V.

Exemple 4

On opère de la même façon que dans l'exemple 2 sauf que l'acrylate d'hydroxyéthyle est remplacé par l'alcool allylique.

Exemple 5

Le mélange apte à former le polyuréthane-acrylique, décrit dans l'exemple 1 est coulé sur une feuille de matière plastique formé d'une couche de polyuréthane thermoplastique présentant des propriétés d'absorbeur d'énergie et une couche de polyuréthane thermodurcissable présentant des propriétés d'autocicatrisation et d'antilacération, par exemple la feuille décrite dans la publication de brevet européen 0 133 090.

Après formation de la couche adhésive, la feuille à trois couches est associée à une feuille de verre par l'intermédiaire de la couche adhésive et l'ensemble est soumis à un traitement aux U.V. à travers la feuille de matière plastique.

Exemple 6

On opère de la même façon que dans l'ensemble 5 sauf que le mélange apte à former la couche de polyuréthane est celui décrit dans l'exemple 3.

**Revendications**

1. Utilisation d'une couche adhésive transparente dans la fabrication des vitrages feuilletés comprenant un support monolithique ou feuilleté en verre et/ou en matière plastique et une feuille de polyuréthane, pour l'adhésion du support et de ladite feuille de polyuréthane, caractérisée en ce que la couche adhésive comprend un polyuréthane formé à partir d'un composant isocyanate choisi parmi les isocyanates aliphatiques, cycloaliphatiques, aliphatiques-aromatiques non sensibles à la lumière et pouvant contenir des fonctions urée ou encore des biurets d'isocyanate, un composant polyol comprenant au moins un polyol choisi parmi les polyétherpolyols ou les polyesterpolyols de masse moléculaire comprise entre 450 et 2 000, les polycaprolactones de masse moléculaire comprise entre 500 et 2 000, des polycarbonatepolyols et polyesterpolycarbonatepolyols de masse moléculaire comprise entre 1 000 et 2 000, des polybutadiènes à fonction hydroxyle ou carboxyle, au moins un diol court de masse moléculaire comprise entre 50 et 200, au moins un monoalcool de masse moléculaire inférieure à 300 présentant dans sa formule une double liaison éthylénique et au moins un initiateur de polymérisation, et en ce que ladite couche est polymérisable à une température inférieure à 80 °C.

2. Utilisation d'une couche adhésive selon la revendication 1, caractérisée en ce que le monoalcool de masse moléculaire inférieure à 300 est choisi parmi l'acrylate d'hydroxyéthyle et l'alcool allylique.

3. Utilisation d'une couche adhésive selon une des revendications 1 ou 2, caractérisé en ce que l'initiateur de polymérisation est choisi parmi les photo-initiateurs, les dérivés radicalaires.

4. Utilisation d'une couche adhésive selon la revendication 3, caractérisée en ce que l'initiateur de polymérisation est un photo-initiateur et que la couche est polymérisée par radiations U.V. ou électronique.

5. Utilisation d'une couche adhésive selon une des revendications 1 à 4, caractérisée en ce que le composant polyol comprend un agent réticulant de fonctionalité supérieure à 2.

6. Vitrage feuilleté comprenant un support monolithique ou feuilleté en verre et/ou en matière plastique et une feuille de polyuréthane comprenant une couche antilacérante et autocicatrisable, caractérisé en ce que la feuille adhère au support par l'intermédiaire de la couche adhésive telle que définie dans une des revendications 1 à 5.

7. Vitrage feuilleté comprenant un support monolithique ou feuilleté en verre et/ou en matière plastique et une feuille à deux couches de polyuréthane, une couche antilacérante et autocicatrisable et une couche ayant des propriétés d'absorbeur d'énergie caractérisé en ce que la feuille à deux couches adhère au support par l'intermédiaire de la couche adhésive telle que définie dans une des revendications 1 à 5.

## Claims

1. Use of a transparent adhesive layer in the production of laminated panes comprising a monolithic or laminated support of glass and/or plastics material and a sheet of polyurethane, for the bonding together of the support and of said sheet of polyurethane, characterized in that the adhesive layer comprises a polyurethane formed from an isocyanate component chosen from among the aliphatic, cycloaliphatic, and aliphatic-aromatic isocyanates that are insensitive to light and may contain urea functions or isocyanate biurets, a polyol component comprising at least one polyol selected from among the polyether polyols or the polyester polyols having a molecular weight from 450 to 2,000, the polycaprolactones having a molecular weight from 500 to 2,000, polycarbonate polyols and polyester polycarbonate polyols having a molecular weight from 1,000 to 2,000, polybutadienes having a hydroxyl or carboxyl function, at least one short diol having a molecular weight from 50 to 200, at least one mono-alcohol having a molecular weight less thant 300 and possessing in its formula a double ethylenic bond and at least one polymerization initiator, and in that said layer is polymerizable at a temperature below 80 °C.

2. Use of an adhesive layer according to Claim 1, characterized in that the mono-alcohol having a molecular weight below 300 is selected from among hydroxyethyl acrylate and allyl acrylate.

3. Use of an adhesive layer according to one of Claims 1 or 2, characterized in that the polymerization initiator is selected from the photo-initiators and the radical derivatives.

4. Use of an adhesive layer according to Claim 3, characterized in that the polymerization initiator is a photo-initiator and that the layer is polymerized by ultraviolet or electronic radiations.

5. Use of an adhesive layer according to one of Claims 1 to 4, characterized in that the polyol component comprises a cross-linking agent having a functionality exceeding 2.

6. Laminated pane comprising a monolithic or laminated support of glass and/or of plastics material and a sheet of polyurethane, comprising an anti-laceration and self-healing layer, characterized in that the sheet adheres to the support through the intermediary of the adhesive layer as defined in one of Claims 1 to 5.

7. Laminated pane comprising a monolithic or laminated support of glass and/or of plastics material and a sheet having two layers of polyurethane, an anit-laceration and self-healing layer and a layer having energy-absorber properties, characterized in that the sheet having two layers adheres to the support through the intermediary of the adhesive layer as defined in one of Claims 1 to 5.

## Patentansprüche

1. Verwendung einer transparenten Klebeschicht bei der Herstellung von Verbundglas, umfassend einen monolithischen oder Verbundträger aus Glas und/oder Kunststoffmaterial und eine Polyurethanfolie, zum Verkleben des Trägers und der genannten Polyurethanfolie, dadurch gekennzeichnet, daß die Klebstoffschicht ein Polyurethan umfaßt, das hergestellt ist aus einer Isocyanatverbindung, ausgewählt aus gegenüber Licht unempfindlichen aliphatischen, cycloaliphatischen und aliphatisch-aromatischen Isocyanaten, die funktionelle Harnstofforder noch Isocyanat-Biuretgruppen enthalten können, einer Polyolverbindung, umfassend mindestens ein Polyol, ausgewählt aus Polyätherpolyolen oder Polyesterpolyolen mit einem Molekulargewicht zwischen 450 und 2 000, Polycaprolactonen eines Molekulargewichtes zwischen 500 und 2 000, Polycarbonatpolyolen und Polyesterpolycarbonatpolyolen mit einem Molekulargewicht zwischen 1 000 und 2 000, Polybutadienen mit funktionellen Hydroxyl- oder Carboxylgruppen, mindestens einem kurzen Diol eines Molekulargewichtes zwischen 50 und 200, mindestens einem Monoalkohol mit einem Molekulargewicht von weniger als 300, der in seiner Formel eine ethylenische Doppelbindung aufweist und mindestens einem Polymerisationsinitiator und die genannte Schicht bei einer Temperatur unterhalb von 80 °C polymerisierbar ist.

2. Verwendung einer Klebeschicht nach Anspruch 1, dadurch gekennzeichnet, daß der Monoalkohol eines Molekulargewichtes unterhalb von 300 ausgewählt ist aus Hydroxyethylacrylat und Allylalkohol.

3. Verwendung einer Klebeschicht nach einem der Ansprüche 1 oder 2, dadurch gekennzeichnet, daß der Polymerisationsinitiator ausgewählt ist aus Photoinitiatoren und radikalartigen Derivaten.

4. Verwendung einer Klebeschicht nach Anspruch 3, dadurch gekennzeichnet, daß der Polymerisationsinitiator ein Photoinitiator ist und die Schicht durch UV- oder Elektronenstrahlen polymerisiert ist.

5. Verwendung einer Klebeschicht nach einem der Ansprüche 1 bis 4, dadurch gekennzeichnet, daß die Polyolverbindung ein Vernetzungsmittel mit mehr als zwei funktionellen Gruppen umfaßt.

6. Verbundglas, umfassend einen monolithischen oder Verbundträger aus Glas und/oder Kunststoffmaterial und eine Polyurethanfolie, die eine reißfeste und selbstheilende Schicht umfaßt, dadurch gekennzeichnet, daß die Folie am Träger mittels einer Klebeschicht haftet, wie sie in einem der Ansprüche 1 bis 5 definiert ist.

7. Verbundglas, umfassend einen monolithischen oder Verbundträger aus Glas und/oder Kunststoffmaterial und eine Polyurethanfolie aus zwei Schichten, von denen eine Schicht reißfest und selbstheilend ist und die andere Schicht energieabsorbierende Eigenschaften aufweist, dadurch gekennzeichnet, daß die Folie aus zwei Schichten am Träger mittels einer Klebeschicht haftet, wie sie in einem der Ansprüche 1 bis 5 definiert ist.